# EUROPEAN PATENT SPECIFICATION

(11) **EP 4 319 205 B1**
(45) Date of publication and mention of the grant of the patent: **25.11.2026**
(21) Application number: 21934038.7
(22) Date of filing: 01.04.2021
(51) Int. Cl.: H04W 4/06, H04W 76/40

(54) **MULTICAST BROADCAST SERVICE TRANSMISSION METHOD AND APPARATUS, AND STORAGE MEDIUM**
VERFAHREN UND VORRICHTUNG ZUR ÜBERTRAGUNG EINES MULTICAST-BROADCAST-DIENSTES UND SPEICHERMEDIUM
PROCÉDÉ ET APPAREIL DE TRANSMISSION DE SERVICE DE DIFFUSION OU DE MULTIDIFFUSION ET SUPPORT DE STOCKAGE

(43) Date of publication of application: 07.02.2024
(73) Proprietor: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2021/085122
(87) International publication number: WO 2022/205381

(56) References cited:
- EP-A1- 4 319 287
- CN-A- 111 771 422
- US-A1- 2018 206 080
- CATT: "Summary of Email Discussion [Post111-e][906][MBS] Idle mode support", vol. RAN WG2, no. Electronic; 20201102 - 20201113, 23 October 2020 (2020-10-23), XP051941902, Retrieved from the Internet <URL:https://ftp.3gpp.org/tsg_ran/WG2_RL2/TSGR2_112-e/Docs/R2-2008796.zip R2-2008796 Summary of Email Discussion Post111-e906 MBS Idle mode support.docx> [retrieved on 20201023]
- SPREADTRUM COMMUNICATIONS: "MBS for Idle and Inactive mode UE", 3GPP DRAFT; R2-2007055, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20200817 - 20200828, 6 August 2020 (2020-08-06), Mobile Competence Centre ; 650, route des Lucioles ; F-06921 Sophia-Antipolis Cedex ; France , XP051910912
- VIVO: "Overview of NR MBS", 3GPP DRAFT; R2-2007033, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20200818 - 20200828, 7 August 2020 (2020-08-07), Mobile Competence Centre ; 650, route des Lucioles ; F-06921 Sophia-Antipolis Cedex ; France , XP051911881

## Description

### TECHNICAL FIELD

The disclosure relates to the field of wireless communication technologies, and more particularly, to a method and an apparatus for transmitting or receiving a multicast broadcast service (MBS), and a storage medium.

### BACKGROUND

A multicast broadcast service (MBS) is introduced into a wireless communication system to satisfy the growing demand of multimedia applications.

In the related art, when a network side transmits MBS data by a multicast manner, a terminal enters a radio resource control (RRC) connected state, joins a multicast group, and indicates the network side that the terminal needs to receive specific MBS data. The network side transmits reception configuration information of the MBS data to the terminal and the terminal receives the MBS data according to the configuration information.

However, in the above solution, when the network side transmits the MBS data by the multicast manner, the terminal needs to be kept in the RRC connected state all the time, which may waste the power resources of the terminal.

US20180206080A1 discloses a method for UE handling interest indications for broadcast/multicast services in wireless systems. The method comprises: transmitting a first interest indication in a first RRC_CONNECTED state; entering RRC_INACTIVE; upon reentering RRC_CONNECTED, determining whether to send a second interest indication based on content differences, cell characteristics (RAN paging area/notification area/RAT), or network requests. 3GPP DRAFT R2-2008796 discloses discussions on supporting MBS reception in RRC_IDLE/INACTIVE states. Solutions A (reusing connected-mode configurations) and B (LTE SC-PTM-based) are analyzed.

### SUMMARY

The disclosure provides a method and an apparatus for transmitting or receiving a multicast broadcast service (MBS), and a storage medium. Technical solutions may be as follows. The invention is set out in the appended set of claims.

The technical solutions provided in the embodiments of the disclosure may include the following beneficial effects.

The user equipment obtains the MBS reception configuration information indicated by the network side equipment, and receives the MBS data transmitted by the multicast manner, in the RRC idle state or the RRC inactive state, so that the UE may receive the MBS in the INACTIVE/IDLE state. In the MBS transmission or reception scenario, the power consumption of the terminal is reduced and the battery life of the terminal is improved.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a schematic diagram of a protocol stack structure according to some embodiments.
FIG. 2 is a schematic diagram illustrating an implementation environment involved in a method for transmitting or receiving an MBS according to some embodiments.
FIG. 3 is a flowchart of a method for transmitting or receiving an MBS according to some embodiments.
FIG. 4 is a flowchart of a method for transmitting or receiving an MBS according to some embodiments.
FIG. 5 is a flowchart of a method for transmitting or receiving an MBS according to some embodiments.
FIG. 6 is a block diagram of an apparatus for transmitting or receiving an MBS according to some embodiments.
FIG. 7 is a block diagram of an apparatus for transmitting or receiving an MBS according to some embodiments.
FIG. 8 is a block diagram of a communication device according to some embodiments.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of the embodiments do not represent all implementations consistent with the embodiments of the disclosure. Instead, they are merely examples of apparatuses and methods consistent with aspects related to the disclosure as recited in the appended claims.

It should be understood that "several" mentioned in the disclosure may refer to one or more, and "plurality" or "multiple" may refer to two or more. The term "and/or" may describe association relationships of associated objects, indicating that there may be three types of relationships, for example, A and/or B, which may mean: A exists alone, A and B exist at the same time, and B exists alone. The character "/" generally indicates that the associated objects before and after are in an "or" relationship.

For ease of understanding, several terms and concepts involved in the disclosure are introduced below.

### 1) Multicast broadcast service (MBS)

MBS is also called multimedia broadcast and multicast service (MBMS).

In the fifth generation new radio access technology (5G New RAT (5G NR)) system, the MBS may be transmitted by a physical downlink shared channel (PDSCH) scheduled by a physical downlink control channel (PDCCH). The PDCCH for scheduling the MBS is indicated by a specific MBS scheduling identity (or ID) (e.g., group radio network temporary identity (G-RNTI), an MBS wireless network temporary ID).

The MBS may be marked by the following "MBS ID":
a temporary mobile group identity (TMGI);
an MBS session ID; or
an MBS Quality of Service flow ID (MBS QoS flow ID).

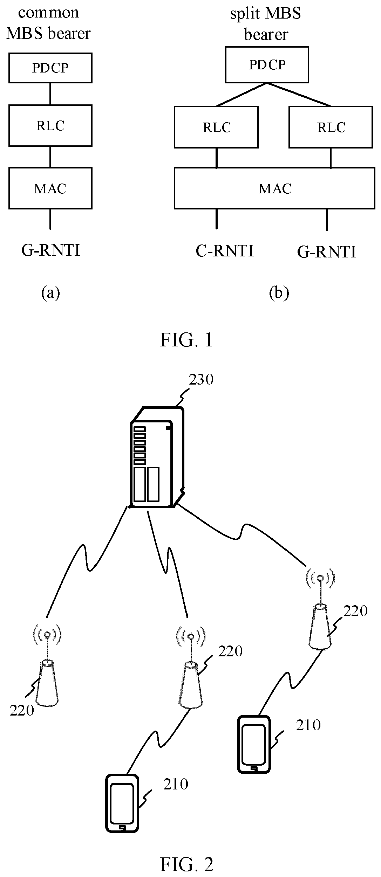

The MBS may be transmitted through a specific MBS radio bearer (MRB). With reference to FIG. 1, FIG. 1 is a schematic diagram of a protocol stack structure according to some embodiments. As illustrated in FIG. 1, the protocol stack structure for wireless bearers for bearing the MBS may include any one of a common MBS bearer and a split MBS bearer.

The common MBS bearer (as illustrated in part (a) of FIG. 1): one packet data convergence protocol (PDCP) entity is associated with one radio link control (RLC) entity, and data of the RLC entity are scheduled and transmitted by the G-RNTI PDCCH.

The split MBS bearer (as illustrated in part (b) of FIG. 1): one PDCP is associated with 2 RLC entities, data of one RLC entity are scheduled and transmitted by the G-RNTI PDCCH, and data of another RLC entity are scheduled and transmitted through a cell radio network temporary identify (C-RNTI) PDCCH.

MBS transmission modes include the following.

Transmission mode 1 (multicast transmission): a terminal (also called a user equipment (UE)) enters an RRC connected state (CONNECTED state) to receive transmission configuration information of the MBS, thereby receiving the MBS. The network side transmits reception configuration information of the MBS to the UE through a UE-specific signaling. The MRB is carried by the common MBS in FIG. 1.

Transmission mode 2 (broadcast transmission): the UE may receive the transmission configuration information of the MBS in an IDLE state, an INACTIVE state, or a CONNECTED state, and receive the MBS. The network side transmits the reception configuration information of the MBS to the UE through system information (e.g., system information block (SIB) and MBS control channel information (e.g., MBS control channel (MCCH)). The MRB adopts the common MBS bearer or the split MBS bearer in FIG. 1.

### 2) RRC state

Connection states of an access stratum (AS) of the UE includes the following three types.

An idle state (RRC_IDLE): using mobility based on UE cell selection. A paging message of a core network is received in a discontinuous reception (DRX) manner.

An inactive state (RRC_INACTIVE): using mobility based on UE cell selection. A paging message of a core network is received in a DRX manner. The UE suspends a data radio bearer (DRB) for service reception, and retains DRB configuration information of the AS. The configuration information of the access layer of the UE is stored in an anchor gNB.

A connected state (RRC_CONNECTED): using mobility based on cell handover configured by network. The gNB and the UE establish and save AS context of the UE, and transmit and receive unicast services through the DRB.

### 3) Dual connectivity (DC)

The UE may be configured with 2 cell groups.

A master cell group MCG): includes one primary cell (PCell). Optionally one or more secondary cells (SCells) are configured.

A secondary cell group (SCG): includes one primary secondary cell (PSCell). Optionally one or more SCells are configured.

The PCell and the PSCell may be collectively referred to as a special cell (SpCell).

For the MBS transmitted by the multicast manner (that is, the above-mentioned transmission mode 1), after the UE enters the RRC connected state and joins the multicast group, the network side may transmit the reception configuration information of the MBS, such as a G-RNTI, an MBS session ID, and a MRB bearer configuration (including PDCP/RLC/logical channel configuration information and DRX configuration for receiving the MBS (e.g., service monitoring period/monitoring start position/monitoring duration)) to the UE. However, this solution needs to keep the UE in the RRC connected state all the time, which may lead to more power consumption of the UE (such as measurement and control channel monitoring in the connected state).

Various embodiments of the disclosure provide a scheme for transmitting or receiving an MBS, so that the UE may receive the MBS in the INACTIVE/IDLE state, thereby reducing the power consumption of the terminal and improving the endurance of the terminal in the MBS transmission or reception scenario.

FIG. 2 is a schematic diagram illustrating an implementation environment involved in a method for transmitting or receiving an MBS according to some embodiments. As illustrated in FIG. 2, the implementation environment may include several user equipments 210 and base stations 220.

The user equipment 210 may support cellular mobile communication technologies, for example, the 5th generation mobile communication (5G) technology. Alternatively, the user equipment 210 may also support a next-generation mobile communication technology following the 5G technology.

For example, or alternatively, the user equipment 210 may also be a user terminal equipment, such as a mobile telephone (or "cellular" telephone) and a computer with a mobile terminal, for example, a portable, pocket-sized, hand-held, computer built-in, or vehicle-mounted mobile device, such as, a station (STA), a subscriber unit, a subscriber station, a mobile station, a mobile, a remote station, an access point, a remote terminal, an access terminal, a user terminal, a user agent, a user device, or a user equipment (UE). In detail, for example, the user equipment 210 may be a mobile terminal such as a smartphone, a tablet computer, and an e-book reader, or may be a smart wearable device such as smart glasses, a smart watch, or a smart bracelet.

Alternatively, the user equipment 210 may be a vehicle-mounted communication device, for example, a trip computer with a wireless communication function, or a wireless communication device connected to an external trip computer.

Alternatively, the user equipment 210 may also be a roadside device, for example, a street light, a signal light or other roadside device with a wireless communication function.

The base station 220 may be a network side equipment in the wireless communication system. The wireless communication system may also be a 5G system, also known as the NR system. Alternatively, the wireless communication system may also be a next-generation system following the 5G system.

The base station 220 may be a next generation node base station (gNB) adopting a centralized and distributed architecture in the 5G system. When the base station 220 adopts the centralized and distributed architecture, it usually includes a central unit (CU) and at least two distributed units (DUs). The central unit is provided with a protocol stack of a Packet Data Convergence Protocol (PDCP) layer, a Radio Link Control (RLC) layer, and a Media Access Control (MAC) layer. The distributed unit is provided with a protocol stack of a Physical (PHY) layer. Embodiments of the disclosure may not limit the implementation manner of the base station 220.

A wireless connection may be established between the base station 220 and the user equipment 210 through a wireless air interface. In different embodiments, the wireless air interface may be a wireless air interface based on the 5G standard, such as the wireless air interface is a new air interface; or the wireless air interface may be a wireless air interface based on the next generation mobile communication network technology standard following the 5G standard.

Optionally, the above wireless communication system may further include a network management device 230.

Several base stations 220 are respectively connected to the network management device 230. The network management device 230 may be a core network device in the wireless communication system. For example, the network management device 230 may be a Mobility Management Entity (MME) in an Evolved Packet Core (EPC). Alternatively, the network management device may be other core network devices, such as a Serving Gate Way (SGW), a Public Data Network Gate Way (PGW), a Policy and Charging Rules Function, or a Home Subscriber Server (HSS), etc. The implementation form of the network management device 230 is not limited in the embodiments of the disclosure.

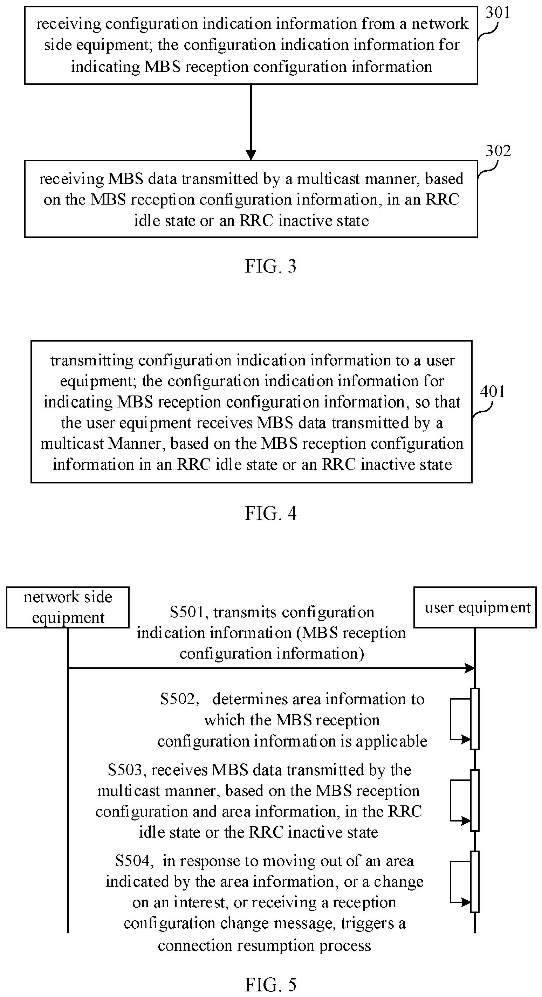

FIG. 3 is a flowchart of a method for transmitting or receiving an MBS according to some embodiments. The method for transmitting or receiving an MBS may be performed by a user equipment. For example, the user equipment may be the user equipment 210 in the implementation environment in FIG. 2. As illustrated in FIG. 3, the method may include the following steps.

In step 301, configuration indication information from a network side equipment is received; the configuration indication information for indicating MBS reception configuration information.

In step 302, MBS data transmitted in, are received based on the MBS reception configuration information in an RRC idle state or an RRC inactive state.

In a possible implementation manner, receiving the configuration indication information from the network side equipment includes:
receiving a connection release message from the network side equipment in an RRC connected state; and
obtaining the configuration indication information carried in the connection release message.

In a possible implementation manner, the configuration indication information includes the MBS reception configuration information.

Or the configuration indication information indicates that the MBS reception configuration information used in an RRC connected state is used as the MBS reception configuration information used in the RRC idle state or the RRC inactive state.

In a possible implementation manner, the MBS reception configuration information includes:
an MBS ID, an MBS scheduling ID, and an MBS bearer configuration.

In a possible implementation manner, the MBS reception configuration information further includes at least one of:
a DRX configuration and a security configuration for MBS reception.

In a possible implementation manner, the method further includes:
determining area information to which the MBS reception configuration information is applicable;
receiving the MBS data transmitted by the multicast manner, based on the MBS reception configuration information, in the RRC idle state or the RRC inactive state includes:
receiving the MBS data transmitted by the multicast manner, based on the MBS reception configuration and the area information, in the RRC idle state or the RRC inactive state.

In a possible implementation manner, the area information is indicated by the network side equipment.

Or the area information is predefined by a protocol.

In a possible implementation manner, the area information includes at least one of:
a cell or a cell list, a cell type, an MBS area ID, an access network notification area ID, or a track area ID.

In a possible implementation manner, the method further includes:
in response to the user equipment moving out of an area indicated by the area information, or a change on an interest of the user equipment in receiving MBS data, or the user equipment receiving a reception configuration change message from the network side, triggering a connection resumption process.

In a possible implementation manner, the method further includes:
in response to the connection resumption process being triggered by the user equipment moving out of the area indicated by the area information, indicating to the network side equipment that a connection resumption reason is an MBS reception area update or an MBS reception area change; or
in response to the connection resumption process being triggered by the change on the interest of the user equipment in receiving MBS data, indicating to the network side equipment that a connection resumption reason is an MBS interest change or transmitting an uplink signaling; or
in response to the connection resumption process being triggered by the reception configuration change message, indicating to the network side equipment that a connection resumption reason is at least one of: an MBS configuration update, an MBS reception area update, or an MBS reception area change.

In a possible implementation manner, the method further includes:
setting a frequency point or a cell corresponding to the area information as a high-priority frequency point or a high-priority cell for the user equipment to perform a cell selection or reselection.

In a possible implementation manner, the method further includes:
in response to the user equipment moving out of an area indicated by the area information, or a change on an interest of the user equipment in receiving MBS data, or the user equipment receiving a reception configuration change message from the network side, cancelling the frequency point or the cell corresponding to the area information as the high-priority frequency point or the high-priority cell for the user equipment to perform the cell selection or reselection.

In a possible implementation manner, the reception configuration change message is indicated by the network side through an RRC message or physical channel information.

In a possible implementation manner, the method further includes:
performing a specified processing on an MAC entity.

The specified processing includes at least one of:
clearing cached data of other hybrid automatic repeat request (HARQ) processes except a downlink HARQ process used for multicast; or
setting next received data of other HARQ processes except a downlink HARQ process used for multicast as data that are newly transmitted.

In a possible implementation manner, the method further includes:
in response to an MBS bearer corresponding to the user equipment being a split MBS bearer, suspending a unicast path of the split MBS bearer.

In a possible implementation manner, suspending the unicast path of the split MBS bearer includes at least one of:
suspending an RLC entity of the unicast path of the split MBS bearer; or
stopping receiving scheduling information of the unicast path of the split MBS bearer.

In a possible implementation manner, the method further includes:
in response to the user equipment triggering a connection resumption process and receiving an indication for resuming an RRC connection from the network side, resuming the unicast path of the MBS bearer.

To sum up, in the solutions in the embodiments of the disclosure, the user equipment obtains the MBS reception configuration information indicated by the network side equipment and receives the MBS data transmitted by the multicast manner, in the RRC idle state or the RRC inactive state, so that the UE may receive the MBS in the INACTIVE/IDLE state, thereby reducing the power consumption of the terminal and improving the endurance of the terminal in the MBS transmission or reception scenario.

FIG. 4 is a flowchart of a method for transmitting or receiving an MBS according to some embodiments. The method for transmitting or receiving an MBS may be performed by a network side equipment. For example, the network side equipment may be the base station 220 or the network management device 230 in the implementation environment in FIG. 2. As illustrated in FIG. 4, the method may include the following steps.

Step 401, configuration indication information is transmitted to a user equipment; the configuration indication information for indicating MBS reception configuration information, so that the user equipment receives MBS data transmitted by a multicast manner, based on the MBS reception configuration information, in an RRC idle state or an RRC inactive state.

In a possible implementation manner, transmitting the configuration indication information to the user equipment includes:
in response to the user equipment being in an RRC connected state, transmitting a connection release message to the user equipment; the connection release message for carrying the configuration indication information.

In a possible implementation manner, the configuration indication information includes the MBS reception configuration information.

Or the configuration indication information indicates that the MBS reception configuration information used in an RRC connected state is used as the MBS reception configuration information used in the RRC idle state or the RRC inactive state.

In a possible implementation manner, the MBS reception configuration information includes:
an MBS ID, an MBS scheduling ID, and an MBS bearer configuration.

In a possible implementation manner, the MBS reception configuration information further includes at least one of:
a DRX configuration and a security configuration for MBS reception.

In a possible implementation, the method further includes:
indicating, to the user equipment, area information to which the MBS reception configuration information is applicable.

In a possible implementation manner, the area information to which the MBS reception configuration information is applicable is indicated to the user equipment through an RRC message or physical channel information.

To sum up, in the solutions in the embodiments of the disclosure, the network side equipment indicates the MBS reception configuration information to the user equipment, so that the user equipment receives the MBS data transmitted by the multicast manner, in the RRC idle state or the RRC inactive state and the UE may receive the MBS in the INACTIVE/IDLE state, thereby reducing the power consumption of the terminal and improving the endurance of the terminal in the MBS transmission or reception scenario.

FIG. 5 is a flowchart of a method for transmitting or receiving an MBS according to some embodiments. The method for transmitting or receiving an MBS may be performed interactively by the user equipment and the network side equipment. For example, the communication device may be the user equipment 210 in the illustrated implementation environment in FIG. 2. The network side equipment may be the base station 220 or the network management device 230 in the illustrated implementation environment in FIG. 2. As illustrated in FIG. 5, the method may include the following steps.

In step 501, the network side equipment transmits configuration indication information to the user equipment and the user equipment receives the configuration indication information.

The configuration indication information is used to indicate MBS reception configuration information.

In a possible implementation manner, the network side equipment transmits the configuration indication information to the user equipment, which may include:
in response to the user equipment being in the RRC connected state, transmitting a connection release message to the user equipment; in which the connection release message carries the configuration indication information.

Correspondingly, in the RRC connected state, the user equipment receives the connection release message from the network side equipment and obtains the configuration indication information carried in the connection release message.

In embodiments of the disclosure, the network side equipment may provide the UE with the MBS reception configuration information. The MBS reception configuration information is used for receiving MBS data for the UE in the IDLE state or the INACTIVE state.

For example, in the RRCRelease message, the network side equipment indicates the UE to enter the INACTIVE state (for example, indicated by a "suspendConfig" signaling). At the same time, the network side equipment indicates the MBS reception configuration information used for receiving the MBS data for the UE in the INACTIVE state. For example, the MBS reception configuration information may be "mbsConfig" information.

In a possible implementation manner, the configuration indication information includes the MBS reception configuration information.

In an exemplary solution, the above-mentioned MBS reception configuration information may be explicitly configured through the configuration indication information, that is, the above-mentioned configuration indication information includes the MBS reception configuration information.

In a possible implementation manner, the configuration indication information indicates that the MBS reception configuration information used in the RRC connected state is used as the MBS reception configuration information used in the RRC idle state or the RRC inactive state.

In an exemplary solution, the above-mentioned MBS reception configuration information may be implicitly configured through the configuration indication information, that is, the configuration indication information indicates the UE to retain the MBS reception configuration information previously received and used in the CONNECTED state after entering the INACTIVEA state, as the MBS reception configuration information used in the RRC idle state or the RRC inactive state.

For example, if the above-mentioned MBS reception configuration information had been provided to the UE by the network side equipment when the UE was in the CONNECTED state, the network side equipment may indicate that when the UE enters the IDLE state/INACTIVE state, whether the provided MBS reception configuration information in the CONNECTED state is reserved for the IDLE/INACTIVE state.

For example, if the network side equipment provides "mbsConfig" through the RRCReconfig message, the network side equipment may indicate in the RRCRelease message whether this "mbsConfig" is used in the IDLE/INACTIVE state. For example, a value of "1" for 1 bit in the RRCRelease message indicates that this "mbsConfig" provided in the RRCReconfig message is used in the IDLE/INACTIVE state.

In a possible implementation manner, the MBS reception configuration information includes:
an MBS ID;
an MBS scheduling ID, for example, the MBS scheduling ID may be represented as G-RNTI-1; and
an MBS bearer configuration.

The MBS bearer configuration (i.e., MRB configuration) includes at least one of:
a PDCP configuration, an RLC configuration, or a logical channel configuration.

In a possible implementation manner, the MBS reception configuration information further includes at least one:
a DRX configuration and a security configuration for MBS reception.

Optionally, the MBS reception configuration information may further include the DRX configuration, such as a transmission period, a start time, a duration of each period, and the like.

In addition, the MBS reception configuration information may further include the security configuration for MBS reception, such as security keys and/or security algorithms. Different from the security configuration for unicast service (e.g., DRB) reception, in the MBS, the network side equipment may provide the security configuration for MBS reception for the UE.

In step 502, the user equipment determines area information to which the MBS reception configuration information is applicable.

In a possible implementation manner, the area information is indicated by the network side equipment.

That is, in embodiments of the disclosure, the network side equipment may indicate the area information to which the MBS reception configuration information is applicable, to the user equipment.

For example, the network side equipment may directly carry or implicitly indicate the area information to which the MBS reception the configuration information is applicable through the above configuration indication information.

Alternatively, the network side equipment may also directly carry or implicitly indicate the area information to which the MBS reception the configuration information is applicable through other indication information except the configuration indication information.

In another possible implementation manner, the above-mentioned area information is predefined by a protocol.

In another exemplary solution, the above-mentioned area information may be predefined by a communication protocol. For example, the area information is pre-defined in the protocol, or a determination manner of the area information is pre-defined in the protocol. The user equipment determines the area information according to the determination manner.

In a possible implementation manner, the area information includes at least one of:
a cell or a cell list; for example, the RRCRelease message specifies that "mbsConfig" is applicable to both cell 1 and cell 2;
a cell type; in which the cell type includes any one of: a serving cell in the connected state (for example, "mbsConfig" configured by the RRCRelease message is agreed in the protocol that for the UE in the IDLE/INACTIVE state, it is applicable to all serving cells configured in the connected state), a PCell (for example, "mbsConfig" configured by the RRCRelease message is agreed in the protocol that for the UE in the IDLE/INACTIVE state, it is applicable to the PCell configured in the connected state), an MCG cell (for example, "mbsConfig" configured by the RRCRelease message is agreed in the protocol that for the UE in the IDLE/INACTIVE state, it is applicable to the MCG configured in the connected state), a cell to which the MBS reception configuration information configured in the connected state is applicable (for example, the network side equipment provides "mbsConfig" through the RRCReconfig message, where "mbsConfig" is applicable to cell 1 in the connected state; and then the network side equipment may indicate that "mbsConfig" is used in the IDLE/INACTIVE state in the RRCRelease message, that is, for the UE in the IDLE/INACTIVE state, "mbsConfig" is applicable to cell 1);
an MBS area ID; for example, MBS-Area-1;
an access network notification area ID; for example, RAN-based Notification Area (RNA-1); or
an area ID of a track area (TA).

In a possible implementation manner, the user equipment may further set a frequency point or a cell corresponding to the area information as a high-priority frequency point or a high-priority cell for the user equipment to perform a cell selection or reselection.

In embodiments of the disclosure, the UE sets the frequency point or the cell corresponding to the area to which the MBS reception configuration information is applicable as the high-priority frequency point or the high-priority cell for the cell selection or reselection.

For example, if the applicable area of the MBS reception configuration information configured by the network side equipment is frequency point 1 or cell 1, the UE sets frequency point 1 or cell 1 as the highest priority during the cell selection/reselection process to access preferentially the frequency point or the cell corresponding to the MBS, to ensure the MBS transmission or reception performance.

In a possible implementation manner, in response to the user equipment moving out of an area indicated by the area information, or a change on an interest of the user equipment in receiving MBS data, or the user equipment receiving a reception configuration change message from the network side, it cancels the frequency point or the cell corresponding to the area information as the high-priority frequency point or the high-priority cell for the user equipment to perform the cell selection or reselection.

In an exemplary solution, if the UE moves out of the area to which the MBS reception configuration information is applicable, the UE triggers an MBS area update behavior. The MBS area update behavior includes, if the UE sets the frequency point or the cell corresponding to the area to which the MBS reception configuration information is applicable as the high-priority frequency point or the high-priority cell for the cell selection or reselection, the UE removes the set high-priority frequency point or cell.

For example, the "applicable area" of the MBS reception configuration information configured by the network side equipment is frequency point-1 (or cell-1), and the UE sets frequency point 1 (or cell 1) as the highest priority during the cell reselection process. At this time, the UE reselects from frequency point 1 (or cell 1) to frequency point 2 (or cell 2), the UE removes the highest priority setting of frequency point 1 (or cell 1), and uses the priority of frequency point 1 or (cell 1) provided in the system information.

In an exemplary solution, if the interest of the UE in receiving MBS changes (for example, when the user is watching TV, the user may switch between different TV channels according to his/her interest, that is, the interest in receiving MBS changes), the UE triggers an "MBS interest change behavior". The "MBS interest change behavior" is similar to the above-mentioned "MBS area update behavior". For example, the MBS interest change behavior includes: if the UE sets the frequency or the cell corresponding to the area to which the MBS reception configuration information is applicable as the high-priority frequency or the high-priority cell for the cell selection or reselection, the UE removes the set high-priority frequency or the set high-priority cell.

The UE is interested in a certain MBS, indicating that the UE expects to receive the MBS data. However, the UE is not interested in a certain MBS, indicating that the UE no longer receives the MBS data.

The MBS interest change includes any one of:
1) The UE is no longer interested in some or all of MBSs configured in the MBS reception configuration information;
2) The UE wishes to receive a new MBS; for example, the new MBS is not included in the MBS reception configuration information.

In a possible implementation manner, the reception configuration change message is indicated by the network side through an RRC message or physical channel information. That is, the network side equipment indicates the area information to which the MBS reception configuration information is applicable to the user equipment through the RRC message or the physical channel information.

When the network side needs to update the MBS reception configuration information and/or the area information to which the MBS reception configuration information is applicable, the network side equipment notifies the UE to update the MBS configuration. For example, the UE is indicated to update the MBS configuration through a paging message.

The type of the indication information of the MBS configuration update includes any one of:
1) it is indicated by an RRC message; for example, "MBS configuration update" is indicated in the RRC paging message;
2) it is indicated by physical channel information; for example, "MBS configuration update" is indicated by G-N-RNTI PDCCH; or "MBS configuration update" is indicated by short message bit(s) in the PDCCH of the paging.

In response to the UE using the MBS reception configuration information to receive MBS data, the UE may monitor the above-mentioned "MBS configuration update" indication information.

In step 503, the user equipment receives MBS data transmitted by the multicast manner, based on the MBS reception configuration and the area information, in the RRC idle state or the RRC inactive state.

In a possible implementation manner, the user equipment may also perform a specified processing on the MAC entity.

The specified processing includes at least one of:
clearing cached data of other HARQ processes except a downlink HARQ process used for multicast; or
setting next received data of other HARQ processes except a downlink HARQ process used for multicast as data that are newly transmitted.

According to the above-mentioned MBS reception configuration information, the UE may configure its corresponding protocol entity. The behavior that "the UE configures its corresponding protocol entity" may include processing the MAC entity.

The behavior of "processing the MAC entity" includes processing the downlink HARQ entities by distinguishing between unicast and multicast. Further, the processing behavior includes at least one of:
1) clearing the cached data of other HARQ processes except the downlink HARQ process used for multicast.
   For example, the UE has HARQ processes 1-8. Through multicast scheduling (for example, G-RNTI dynamic scheduling or MBS semi-persistent scheduling), the cached data of multicast services are in HARQ processes 1-4, and/or HARQ processes 1-4 are configured and reserved for reception of multicast services; and the UE clears the cached data in HARQ processes 5-8.
2) setting the next received data of other HARQ processes except the downlink HARQ process used for multicast, as data that are newly transmitted.

For example, the UE has HARQ processes 1-8. Through multicast scheduling (for example, G-RNTI dynamic scheduling or MBS semi-persistent scheduling), the cached data of multicast services are in HARQ processes 1-4, and/or HARQ processes 1-4 are configured and reserved for reception of multicast services; and for the HARQ processes 5-8, the next received transport block (TB) is the received TB firstly.

In a possible implementation manner, in response to an MBS bearer corresponding to the user equipment being a split MBS bearer, the user equipment also suspends a unicast path of the split MBS bearer.

In a possible implementation manner, suspending the unicast path of the split MBS bearer includes at least one of:
suspending an RLC entity of the unicast path of the split MBS bearer; or
stopping receiving scheduling information of the unicast path of the split MBS bearer.

If the bearer type of the MRB corresponding to the MBS data, received by the UE, is the "split MBS bearer", the UE suspends or deletes the unicast path of the split bearer (for example, deletes the RLC entity of the unicast path). The behavior of "suspending the unicast path of the split bearer" includes at least one of:
1) suspending the RLC entity of the unicast path of the split bearer; for example, stopping the uplink data transmission and/or downlink data reception of the RLC entity;
2) stopping receiving scheduling information of the unicast path; for example, stopping monitoring the C-RNTI PDCCH.

In step 504, in response to the user equipment moving out of an area indicated by the area information, or a change on an interest of the user equipment in receiving MBS data, or the user equipment receiving a reception configuration change message from the network side, the user equipment triggers a connection resumption process.

The above-mentioned "MBS area update behavior" further includes: triggering the connection resumption process. For example, if the area configured by the network for the MBS reception configuration information is cell 1, and the UE reselects to cell 2, the UE in the INACTIVE state triggers the connection resumption process.

In an exemplary solution, in response to the change on the interest of the user equipment in receiving MBS, the connection resumption procedure may also be triggered.

In an exemplary solution, in response to the UE receiving the "MBS configuration update" indication, the UE may also trigger the connection resumption process.

In a possible implementation manner, in response to the connection resumption process being triggered by the user equipment moving out of the area indicated by the area information, the user equipment indicates to the network side equipment that a connection resumption reason is an MBS reception area update or an MBS reception area change.

In embodiments of the disclosure, if the UE triggers the connection resumption process, the UE indicates to the network side that "connection resumption reason" is "an MBS reception area update or change". For example, resumeCause is set to "mbsAreaUpdate".

In a possible implementation manner, in response to the connection resumption process being triggered by the change on the interest of the user equipment in receiving MBS data, the user equipment indicates to the network side equipment that a connection resumption reason is an MBS interest change or transmitting an uplink signaling.

In embodiments of the disclosure, if the UE triggers the connection resumption process, the UE indicates to the network side that "connection resumption reason" is any of:
an MBS interest update, for example, mbsInterestUpdate;
or transmitting an uplink signaling, such as mo-Signalling.

In a possible implementation manner, in response to the connection resumption process being triggered by the reception configuration change message, the user equipment indicates to the network side equipment that a connection resumption reason is at least one of: an MBS configuration update, an MBS reception area update, or an MBS reception area change.

In embodiments of the disclosure, if the UE triggers the connection resumption process, the UE indicates to the network side that "connection resumption reason" is "an MBS configuration update" (for example, mbsConfigUpdate) or "an MBS reception area update or change" (for example, mbsAreaUpdate).

The purpose of the UE reporting the "connection resumption reason" to the network side equipment may be to allow the network side equipment to determine whether to allow the UE to resume the EEC connection according to the "connection resumption reason". For example, the network side equipment is currently in a congested state, so it may only give the priority to resume the RRC connection for some urgent services, and the "connection resumption reason" is to allow the network side equipment to determine service requirements of the UE for connection resumption, so that the network may judge whether the RRC connection of some UEs needs to be resumed preferentially through access control.

In a possible implementation manner, in response to the user equipment triggering the connection resumption process and receiving an indication of restoring the RRC connection from the network side (for example, the UE receives the RRCResume message), the user equipment resumes the unicast path of the MBS bearer.

In embodiments of the disclosure, if the UE suspends the unicast path of the split bearer in the above steps, when the network allows to resume the RRC connection, the UE may resume the unicast path of the split bearer. The behavior of "resuming the unicast path of the split bearer" includes at least one of:
resuming the RLC entity of the unicast path of the split bearer; for example, resuming uplink data transmission and/or downlink data reception of the RLC entity;
or resuming receiving the scheduling information of the unicast path; for example, monitoring the C-RNTI PDCCH is resumed.

To sum up, in the solutions in the embodiments of the disclosure, the user equipment obtains the MBS reception configuration information indicated by the network side equipment, and receives the MBS data transmitted by the multicast manner, in the RRC idle state or the RRC inactive state, so that the UE may receive the MBS in the INACTIVE/IDLE state, thereby reducing the power consumption of the terminal and improving the endurance of the terminal in the MBS transmission or reception scenario.

The following are apparatus embodiments of the disclosure, which may be used to execute the method embodiments of the disclosure. For details not disclosed in the apparatus embodiments of the disclosure, reference should be made to the method embodiments of the disclosure.

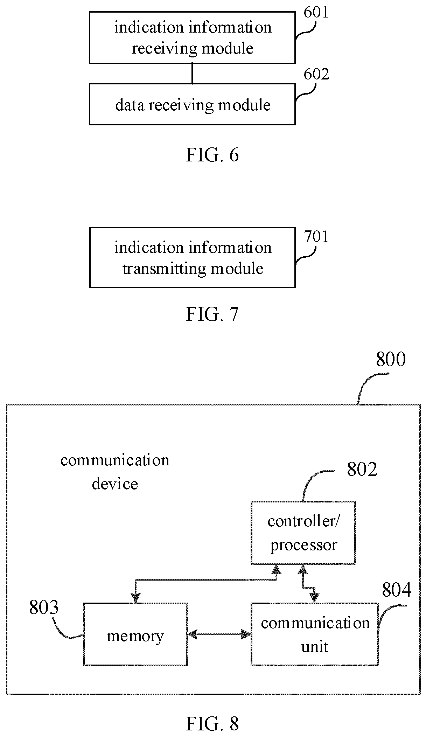

FIG. 6 is a block diagram of an apparatus for transmitting or receiving an MBS according to some embodiments. As illustrated in FIG. 6, the apparatus for transmitting or receiving an MBS may be used in the user equipment 210 in the implementation environment in FIG. 2 to perform all or part of the steps performed by the user equipment in the embodiments in FIG. 3 or FIG. 5. The apparatus for transmitting or receiving an MBS may include an indication information receiving module 601 and a data receiving module 601.

The indication information receiving module 601 is configured to receive configuration indication information from a network side equipment; the configuration indication information for indicating MBS reception configuration information.

The data receiving module 602 is configured to receive MBS data transmitted by a multicast manner, based on the MBS reception configuration information, in an RRC idle state or an RRC inactive state.

In a possible implementation manner, the indication information receiving module 601 includes:
a message receiving submodule, configured to receive a connection release message from the network side equipment in an RRC connected state; and
an indication information receiving sub-module, configured to obtain the configuration indication information carried in the connection release message.

In a possible implementation manner, the configuration indication information includes the MBS reception configuration information.

Or the configuration indication information indicates that the MBS reception configuration information used in an RRC connected state is used as the MBS reception configuration information used in the RRC idle state or the RRC inactive state.

In a possible implementation manner, the MBS reception configuration information includes:
an MBS ID, an MBS scheduling ID, and an MBS bearer configuration.

In a possible implementation manner, the MBS reception configuration information further includes at least one of:
a DRX configuration and a security configuration for MBS reception.

In a possible implementation manner, the apparatus further includes:
an area information determining module, configured to determine area information to which the MBS reception configuration information is applicable.

The data receiving module 602 is configured to receive the MBS data transmitted by the multicast manner, based on the MBS reception configuration and the area information, in the RRC idle state or the RRC inactive state.

In a possible implementation manner, the area information is indicated by the network side equipment.

Or the area information is predefined by a protocol.

In a possible implementation manner, the area information includes at least one of:
a cell or a cell list, a cell type, an MBS area ID, an access network notification area ID, or a track area ID.

In a possible implementation manner, the apparatus further includes:
a connection resumption module, configured to, in response to the user equipment moving out of an area indicated by the area information, or a change on an interest of the user equipment in receiving MBS data, or the user equipment receiving a reception configuration change message from the network side, trigger a connection resumption process.

In a possible implementation manner, in response to the connection resumption process being triggered by the user equipment moving out of the area indicated by the area information, it indicates to the network side equipment that a connection resumption reason is an MBS reception area update or an MBS reception area change; or
in response to the connection resumption process being triggered by the change on the interest of the user equipment in receiving MBS data, it indicates to the network side equipment that a connection resumption reason is an MBS interest change or transmitting an uplink signaling; or
in response to the connection resumption process being triggered by the reception configuration change message, it indicates to the network side equipment that a connection resumption reason is at least one of: an MBS configuration update, an MBS reception area update, or an MBS reception area change.

In a possible implementation manner, the apparatus further includes:
a priority setting module, configured to set a frequency point or a cell corresponding to the area information as a high-priority frequency point or a high-priority cell for the user equipment to perform a cell selection or reselection.

In a possible implementation manner, the apparatus further includes:
a priority cancellation module, configured to, in response to the user equipment moving out of an area indicated by the area information, or a change on an interest of the user equipment in receiving MBS data, or the user equipment receiving a reception configuration change message from the network side, cancel the frequency point or the cell corresponding to the area information as the high-priority frequency point or the high-priority cell for the user equipment to perform the cell selection or reselection.

In a possible implementation manner, the reception configuration change message is indicated by the network side through an RRC message or physical channel information.

In a possible implementation manner, the apparatus further includes:
a processing module, configured to perform a specified processing on an MAC entity.

The specified processing includes at least one of:
clearing cached data of other HARQ processes except a downlink HARQ process used for multicast; or
setting next received data of other HARQ processes except a downlink HARQ process used for multicast as data that are newly transmitted.

In a possible implementation manner, the apparatus further includes:
a unicast path suspension module, configured to, in response to an MBS bearer corresponding to the user equipment being a split MBS bearer, suspend a unicast path of the split MBS bearer.

In a possible implementation manner, suspending the unicast path of the split MBS bearer includes at least one of:
suspending an RLC entity of the unicast path of the split MBS bearer; or
stopping receiving scheduling information of the unicast path of the split MBS bearer.

In a possible implementation manner, the apparatus further includes:
a unicast path resumption module, configured to, in response to the user equipment triggering a connection resumption process and receiving an indication for resuming an RRC connection from the network side, resume the unicast path of the MBS bearer.

To sum up, in the solutions in the embodiments of the disclosure, the user equipment obtains the MBS reception configuration information indicated by the network side equipment and receives the MBS data transmitted by the multicast manner, in the RRC idle state or the RRC inactive state, so that the UE may receive the MBS in the INACTIVE/IDLE state, thereby reducing the power consumption of the terminal and improving the endurance of the terminal in the MBS transmission or reception scenario.

FIG. 7 is a block diagram of an apparatus for transmitting or receiving an MBS according to some embodiments. As illustrated in FIG. 7, the apparatus for transmitting or receiving an MBS may be used in the network side equipment to perform all or part of the steps performed by the network side equipment in the embodiments in FIG. 4 or FIG. 5. The apparatus for transmitting or receiving an MBS may include an indication information transmitting module 701.

The indication information transmitting module 701 is configured to transmit configuration indication information to a user equipment; the configuration indication information for indicating MBS reception configuration information, so that the user equipment receives MBS data transmitted by a multicast manner, based on the MBS reception configuration information, in an RRC idle state or an RRC inactive state.

In a possible implementation manner, the indication information transmitting module 701 is configured to, in response to the user equipment being in an RRC connected state, transmit a connection release message to the user equipment; the connection release message for carrying the configuration indication information.

In a possible implementation manner, the configuration indication information includes the MBS reception configuration information.

Or the configuration indication information indicates that the MBS reception configuration information used in an RRC connected state is used as the MBS reception configuration information used in the RRC idle state or the RRC inactive state.

In a possible implementation manner, the MBS reception configuration information includes:
an MBS ID, an MBS scheduling ID, and an MBS bearer configuration.

In a possible implementation manner, the MBS reception configuration information further includes:
a DRX configuration and a security configuration for MBS reception.

In a possible implementation manner, the apparatus further includes:
an area information indicating module, configured to indicate, to the user equipment, area information to which the MBS reception configuration information is applicable.

In a possible implementation manner, the area information indicating module is configured to indicate, to the user equipment, the area information to which the MBS reception configuration information is applicable through an RRC message or physical channel information.

To sum up, in the solutions in the embodiments of the disclosure, the network side equipment indicates the MBS reception configuration information to the user equipment, so that the user equipment receives the MBS data transmitted by the multicast manner, in the RRC idle state or the RRC inactive state and the UE may receive the MBS in the INACTIVE/IDLE state, thereby reducing the power consumption of the terminal and improving the endurance of the terminal in the MBS transmission or reception scenario.

It should be noted that, when the apparatuses provided in the above embodiments realize their functions, the division of the above functional modules is used as an example for illustration. In practical applications, the above functions may be allocated to different functional modules according to actual needs. That is, the content structure of the apparatuses is divided into different functional modules to complete all or part of the functions described above.

With respect to the devices in the apparatuses embodiments, the specific manners for performing operations for individual modules therein have been described in detail in the embodiments regarding the methods, which will not be elaborated herein.

Some embodiments of the disclosure provide a device for transmitting or receiving an MBS, which may realize all or part of the steps performed by the user equipment in the above-mentioned embodiments of the disclosure in FIG. 3 or FIG. 5. The device for transmitting or receiving an MBS includes a processor and a memory for storing instructions executable by the processor.

The processor is configured to:
receive configuration indication information from a network side equipment; the configuration indication information for indicating MBS reception configuration information; and
receive MBS data transmitted by a multicast manner, based on the MBS reception configuration information, in an RRC idle state or an RRC inactive state.

In a possible implementation manner, receiving the configuration indication information from the network side equipment includes:
receiving a connection release message from the network side equipment in an RRC connected state; and
obtaining the configuration indication information carried in the connection release message.

In a possible implementation manner, the configuration indication information includes the MBS reception configuration information.

Or the configuration indication information indicates that the MBS reception configuration information used in an RRC connected state is used as the MBS reception configuration information used in the RRC idle state or the RRC inactive state.

In a possible implementation manner, the MBS reception configuration information includes:
an MBS ID, an MBS scheduling ID, and an MBS bearer configuration.

In a possible implementation manner, the MBS reception configuration information further includes at least one of:
a DRX configuration and a security configuration for MBS reception.

In a possible implementation manner, the processor is further configured to:
determine area information to which the MBS reception configuration information is applicable;
receiving the MBS data transmitted by the multicast manner, based on the MBS reception configuration information, in the RRC idle state or the RRC inactive state includes:
   receiving the MBS data transmitted by the multicast manner, based on the MBS reception configuration and the area information, in the RRC idle state or the RRC inactive state.

In a possible implementation manner, the area information is indicated by the network side equipment.

Or the area information is predefined by a protocol.

In a possible implementation manner, the area information includes at least one of:
a cell or a cell list, a cell type, an MBS area ID, an access network notification area ID, or a track area ID.

In a possible implementation manner, the processor is further configured to, in response to the user equipment moving out of an area indicated by the area information, or a change on an interest of the user equipment in receiving MBS data, or the user equipment receiving a reception configuration change message from the network side, trigger a connection resumption process.

In a possible implementation manner, in response to the connection resumption process being triggered by the user equipment moving out of the area indicated by the area information, it indicates to the network side equipment that a connection resumption reason is an MBS reception area update or an MBS reception area change; or
in response to the connection resumption process being triggered by the change on the interest of the user equipment in receiving MBS data, it indicates to the network side equipment that a connection resumption reason is an MBS interest change or transmitting an uplink signaling; or
in response to the connection resumption process being triggered by the reception configuration change message, it indicates to the network side equipment that a connection resumption reason is at least one of: an MBS configuration update, an MBS reception area update, or an MBS reception area change.

In a possible implementation manner, the processor is further configured to set a frequency point or a cell corresponding to the area information as a high-priority frequency point or a high-priority cell for the user equipment to perform a cell selection or reselection.

In a possible implementation manner, the processor is further configured to, in response to the user equipment moving out of an area indicated by the area information, or a change on an interest of the user equipment in receiving MBS data, or the user equipment receiving a reception configuration change message from the network side, cancel the frequency point or the cell corresponding to the area information as the high-priority frequency point or the high-priority cell for the user equipment to perform the cell selection or reselection.

In a possible implementation manner, the reception configuration change message is indicated by the network side through an RRC message or physical channel information.

In a possible implementation manner, the processor is further configured to perform a specified processing on an MAC entity;

The specified processing includes at least one of:
clearing cached data of other HARQ processes except a downlink HARQ process used for multicast; or
setting next received data of other HARQ processes except a downlink HARQ process used for multicast as data that are newly transmitted.

In a possible implementation manner, the processor is further configured to, in response to an MBS bearer corresponding to the user equipment being a split MBS bearer, suspend a unicast path of the split MBS bearer.

In a possible implementation manner, suspending the unicast path of the split MBS bearer includes at least one of:
suspending an RLC entity of the unicast path of the split MBS bearer; or
stopping receiving scheduling information of the unicast path of the split MBS bearer.

In a possible implementation manner, the processor is further configured to, in response to the user equipment triggering a connection resumption process and receiving an indication for resuming an RRC connection from the network side, resume the unicast path of the MBS bearer.

For the steps that the processor is configured to execute, reference may be made to the steps performed by the user equipment in the embodiments in FIG. 3 and FIG. 5, and details are not repeated herein.

Some embodiments of the disclosure provide a device for transmitting or receiving an MBS, which may realize all or part of the steps performed by the network side equipment in the above-mentioned embodiments of the disclosure in FIG. 4 or FIG. 5. The device for transmitting or receiving an MBS includes a processor and a memory for storing instructions executable by the processor.

The processor is configured to:
transmit configuration indication information to a user equipment; the configuration indication information for indicating MBS reception configuration information, so that the user equipment receives MBS data transmitted by a multicast manner, based on the MBS reception configuration information, in an RRC idle state or an RRC inactive state.

In a possible implementation manner, transmitting the configuration indication information to the user equipment includes:
in response to the user equipment being in an RRC connected state, transmitting a connection release message to the user equipment; the connection release message for carrying the configuration indication information.

In a possible implementation manner, the configuration indication information includes the MBS reception configuration information.

Or the configuration indication information indicates that the MBS reception configuration information used in an RRC connected state is used as the MBS reception configuration information used in the RRC idle state or the RRC inactive state.

In a possible implementation manner, the MBS reception configuration information includes:
an MBS ID, an MBS scheduling ID, and an MBS bearer configuration.

In a possible implementation manner, the MBS reception configuration information further includes at least one of:
a DRX configuration and a security configuration for MBS reception.

In a possible implementation manner, the processor is further configured to indicate, to the user equipment, area information to which the MBS reception configuration information is applicable.

In a possible implementation manner, indicating, to the user equipment, the area information to which the MBS reception configuration information is applicable includes:
indicating, to the user equipment, the area information to which the MBS reception configuration information is applicable through an RRC message or physical channel information.

For the steps that the processor is configured to execute, reference may be made to the steps performed by the user equipment in the embodiments in FIG. 4 and FIG. 5, and details are not repeated herein.

The foregoing takes the communication device as an example to introduce the solutions provided in the embodiments of the disclosure. It may be understood that, in order to realize the above-mentioned functions, the communication device may include corresponding hardware structures and/or software modules for executing various functions. In conjunction with the modules and algorithm steps of various examples described in the embodiments in the disclosure, the embodiments of the disclosure may be implemented in hardware or a combination of hardware and computer software. Whether a certain function is performed by hardware or computer software driving hardware depends on specific applications and design constraints of the technical solutions. Those skilled in the art may use different manners to implement the described functions for each specific application, but such implementation should not be considered beyond the scope of the technical solutions of the embodiments of the disclosure.

FIG. 8 is a block diagram of a communication device according to some embodiments. The communication device may be implemented as the above-mentioned user equipment or network side equipment, and may perform the above methods or all or part of the steps in the embodiments in FIG. 3, FIG. 4 or FIG. 5.

The communication device 800 includes a communication unit 804 and a processor 802. The processor 802 may also be a controller, which is represented as "controller/processor 802" in FIG. 8. The communication unit 804 is used to support the communication device to communicate with other network entities (e.g., other user equipments or base stations, etc.).

Further, the communication device 800 may further include a memory 803 for storing program codes and data of the communication device 800.

It may be appreciated that FIG. 8 only illustrates a simplified design of the communication device 800. In practical applications, the communication device 800 may include any number of processors, controllers, memories, communication units, etc., and all communication devices that may implement the embodiments of the disclosure fall within the protection scope of the embodiments of the disclosure.

It would be understood by those skilled in the art that in one or more above examples, functions in the above-described embodiments of the disclosure may be implemented by hardware, software, firmware, or any combination thereof. When implemented in software, the functions may be stored on a computer-readable medium or transmitted over as one or more instructions or codes on the computer-readable medium. The computer-readable medium may include both a computer storage medium and a communication medium including any medium that facilitates transferring a computer program from one place to another. The storage medium may be any available medium that may be accessed by a general purpose computer or a special purpose computer.

Embodiments of the disclosure further provide a computer storage medium for storing computer software instructions used by the above-mentioned communication device, which includes a program designed for executing the methods in the above-mentioned various embodiments.

In some embodiments, there is also provided a computer program product or computer program including computer instructions. The computer instructions may be stored in a computer readable storage medium. The processor of the computer device reads the computer instructions from the computer-readable storage medium, and the processor executes the computer instructions, so that the computer device executes the methods in the above-mentioned embodiments.

In some embodiments, there is also provided a chip, and the chip is used for executing the methods in each of the above-mentioned embodiments.

Other embodiments of the disclosure will be apparent to those skilled in the art from consideration of the specification and practice of the disclosure disclosed herein. The disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for receiving a multicast broadcast service, MBS, performed by a user equipment, comprising:
receiving (301) configuration indication information, wherein the configuration indication information indicates MBS reception configuration information from a network side equipment and area information to which the MBS reception configuration information is applicable; and
receiving (302) MBS data transmitted by a multicast manner, based on the MBS reception configuration information and the area information, in a radio resource control, RRC, inactive state;
wherein the area information comprises:
a cell list of cells providing one or more MBS multicast services in the RRC inactive state;
wherein the MBS reception configuration information comprises:
an MBS ID, an MBS scheduling ID, and an MBS bearer configuration, wherein the MBS ID indicates an identifier of an MBS session to be received by the UE in the RRC inactive state, the MBS scheduling ID is a G-RNTI associated to a scheduling of MBS data, and the MBS bearer configuration indicates configuration of a MBS bearer corresponding to the MBS session.

2. The method according to claim 1, wherein receiving (301) the configuration indication information from the network side equipment comprises:
receiving a connection release message from the network side equipment in an RRC connected state; and
obtaining the configuration indication information carried in the connection release message.

3. The method according to claim 1 or 2, wherein
the configuration indication information comprises the MBS reception configuration information;
or
wherein the configuration indication information indicates that the MBS reception configuration information used in an RRC connected state is used as the MBS reception configuration information used in the RRC idle state or the RRC inactive state.

4. The method according to any one of claims 1 to 3, wherein the MBS reception configuration information further comprises at least one of:
a discontinuous reception, DRX, configuration and a security configuration for MBS reception.

5. The method according to any one of claims 1 to 4, further comprising:
determining area information to which the MBS reception configuration information is applicable;
preferably, wherein
the area information is indicated by the network side equipment or predefined by a protocol;
wherein the area information further comprises at least one of:
a cell type, an MBS area ID, an access network notification area ID, or a track area ID.

6. The method according to claim 1, further comprising:
in response to the user equipment moving out of an area indicated by the area information, or a change on an interest of the user equipment in receiving MBS data, or the user equipment receiving a reception configuration change message from the network side equipment, triggering a connection resumption process.

7. The method according to claim 6, wherein:
in response to the connection resumption process being triggered by the user equipment moving out of the area indicated by the area information, indicating to the network side equipment that a connection resumption reason is an MBS reception area update or an MBS reception area change; or
in response to the connection resumption process being triggered by the change on the interest of the user equipment in receiving MBS data, indicating to the network side equipment that a connection resumption reason is an MBS interest change or transmitting an uplink signaling; or
in response to the connection resumption process being triggered by the reception configuration change message, indicating to the network side equipment that a connection resumption reason is at least one of:
an MBS configuration update, an MBS reception area update, or an MBS reception area change.

8. The method according to claim 1, further comprising:
setting a frequency point or a cell corresponding to the area information as a high-priority frequency point or a high-priority cell for the user equipment to perform a cell selection or reselection.

9. The method according to claim 8, further comprising:
in response to the user equipment moving out of an area indicated by the area information, or a change on an interest of the user equipment in receiving MBS data, or the user equipment receiving a reception configuration change message from the network side equipment, cancelling the frequency point or the cell corresponding to the area information as the high-priority frequency point or the high-priority cell for the user equipment to perform the cell selection or reselection.

10. The method according to claim 7 or 9, wherein,
the reception configuration change message is indicated by the network side equipment through an RRC message or physical channel information.

11. A method for transmitting a multicast broadcast service, MBS, performed by a network side equipment, comprising:
transmitting (401) configuration indication information to a user equipment; wherein the configuration indication information indicates MBS reception configuration information and area information to which the MBS reception configuration information is applicable, so that the user equipment receives MBS data transmitted by a multicast manner, based on the MBS reception configuration information and area information, in a radio resource control, RRC, inactive state;
wherein the area information comprises at least one of:
a cell list of cells providing one or more MBS multicast services in the RRC inactive state;
wherein the MBS reception configuration information comprises:
an MBS ID, an MBS scheduling ID, and an MBS bearer configuration, wherein the MBS ID indicates an identifier of an MBS session to be received by the UE in the RRC inactive state, the MBS scheduling ID is a G-RNTI configured to scramble a scheduling of MBS data, and the MBS bearer configuration indicates configuration of MBS bearer to which the MBS session is mapped.

12. The method according to claim 11, wherein transmitting the configuration indication information to the user equipment comprises:
in response to the user equipment being in an RRC connected state, transmitting a connection release message to the user equipment; the connection release message for carrying the configuration indication information.

13. An apparatus configured to receive a multicast broadcast service, MBS, comprising:
an indication information receiving module (601), configured to receive configuration indication information for indicating MBS reception configuration information and area information to which the MBS reception configuration information is applicable from a network side equipment; and
a data receiving module (602), configured to receive MBS data transmitted by a multicast manner, based on the MBS reception configuration information and the area information, in an RRC inactive state;
wherein the area information comprises:
a cell list of cells providing one or more MBS multicast services in the RRC inactive state;
wherein the MBS reception configuration information comprises:
an MBS ID, an MBS scheduling ID, and an MBS bearer configuration, wherein the MBS ID indicates an identifier of an MBS session to be received by the UE in the RRC inactive state, the MBS scheduling ID is a G-RNTI associated to a scheduling of MBS data, and the MBS bearer configuration indicates configuration of a MBS bearer corresponding to the MBS session.

14. An apparatus configured to transmit a multicast broadcast service, MBS, comprising:
an indication information transmitting module (701), configured to transmit configuration indication information to a user equipment; wherein the configuration indication information indicates MBS reception configuration information and area information to which the MBS reception configuration information is applicable, so that the user equipment receives MBS data transmitted by a multicast manner, based on the MBS reception configuration information and area information, in a radio resource control, RRC inactive state;
wherein the area information comprises:
a cell list of cells providing one or more MBS multicast services in the RRC inactive state;
wherein the MBS reception configuration information comprises:
an MBS ID, an MBS scheduling ID, and an MBS bearer configuration, wherein the MBS ID indicates an identifier of an MBS session to be received by the UE in the RRC inactive state, the MBS scheduling ID is a G-RNTI associated to a scheduling of MBS data, and the MBS bearer configuration indicates configuration of a MBS bearer corresponding to the MBS session.

## Patentansprüche

1. Ein Verfahren zum Empfangen eines Multicast-Broadcast-Dienstes, MBS, das von einem Benutzergerät ausgeführt wird, umfassend:
Empfangen (301) von Konfigurationsanzeigeinformationen, wobei die Konfigurationsanzeigeinformationen MBS-Empfangskonfigurationsinformationen von einer netzwerkseitigen Einrichtung und Bereichsinformationen angeben, auf die die MBS-Empfangskonfigurationsinformationen anwendbar sind; und
Empfangen (302) von in einer Multicast-Weise gesendeten MBS-Daten, basierend auf den MBS-Empfangskonfigurationsinformationen und den Bereichsinformationen, in einem inaktiven Zustand der Funkressourcensteuerung, RRC;
wobei die Bereichsinformationen umfassen:
eine Zellenliste von Zellen, die einen oder mehrere MBS-Multicast-Dienste in dem inaktiven RRC-Zustand bereitstellen;
wobei die MBS-Empfangskonfigurationsinformationen umfassen:
eine MBS-ID, eine MBS-Scheduling-ID und eine MBS-Trägerkonfiguration, wobei die MBS-ID eine Kennung einer MBS-Sitzung angibt, die von dem UE in dem inaktiven RRC-Zustand zu empfangen ist, die MBS-Scheduling-ID eine G-RNTI ist, die einem Scheduling von MBS-Daten zugeordnet ist, und die MBS-Trägerkonfiguration eine Konfiguration eines der MBS-Sitzung entsprechenden MBS-Trägers angibt.

2. Das Verfahren nach Anspruch 1, wobei das Empfangen (301) der Konfigurationsanzeigeinformationen von der netzwerkseitigen Einrichtung umfasst:
Empfangen einer Verbindungsfreigabenachricht von der netzwerkseitigen Einrichtung in einem verbundenen RRC-Zustand; und
Erhalten der in der Verbindungsfreigabenachricht mitgeführten Konfigurationsanzeigeinformationen.

3. Das Verfahren nach Anspruch 1 oder 2, wobei
die Konfigurationsanzeigeinformationen die MBS-Empfangskonfigurationsinformationen umfassen;
oder
wobei die Konfigurationsanzeigeinformationen angeben, dass die in einem verbundenen RRC-Zustand verwendeten MBS-Empfangskonfigurationsinformationen als die in dem RRC-Ruhezustand oder dem inaktiven RRC-Zustand verwendeten MBS-Empfangskonfigurationsinformationen verwendet werden.

4. Das Verfahren nach einem der Ansprüche 1 bis 3, wobei die MBS-Empfangskonfigurationsinformationen ferner zumindest eines von Folgendem umfassen:
eine Konfiguration für diskontinuierlichen Empfang, DRX, und eine Sicherheitskonfiguration für MBS-Empfang.

5. Das Verfahren nach einem der Ansprüche 1 bis 4, ferner umfassend:
Bestimmen von Bereichsinformationen, auf die die MBS-Empfangskonfigurationsinformationen anwendbar sind;
vorzugsweise, wobei
die Bereichsinformationen durch die netzwerkseitige Einrichtung angegeben oder durch ein Protokoll vordefiniert sind;
wobei die Bereichsinformationen ferner zumindest eines von Folgendem umfassen:
einen Zellentyp, eine MBS-Bereichs-ID, eine Zugangsnetz-Benachrichtigungsbereichs-ID oder eine Tracking-Bereichs-ID.

6. Das Verfahren nach Anspruch 1, ferner umfassend:
als Reaktion darauf, dass sich das Benutzergerät aus einem durch die Bereichsinformationen angegebenen Bereich herausbewegt, oder auf eine Änderung eines Interesses des Benutzergeräts am Empfangen von MBS-Daten, oder darauf, dass das Benutzergerät eine Empfangskonfigurationsänderungsnachricht von der netzwerkseitigen Einrichtung empfängt, Auslösen eines Verbindungswiederaufnahmeprozesses.

7. Das Verfahren nach Anspruch 6, wobei:
als Reaktion darauf, dass der Verbindungswiederaufnahmeprozess dadurch ausgelöst wird, dass sich das Benutzergerät aus dem durch die Bereichsinformationen angegebenen Bereich herausbewegt, Angeben gegenüber der netzwerkseitigen Einrichtung, dass ein Verbindungswiederaufnahmegrund eine MBS-Empfangsbereichsaktualisierung oder eine MBS-Empfangsbereichsänderung ist; oder
als Reaktion darauf, dass der Verbindungswiederaufnahmeprozess durch die Änderung des Interesses des Benutzergeräts am Empfangen von MBS-Daten ausgelöst wird, Angeben gegenüber der netzwerkseitigen Einrichtung, dass ein Verbindungswiederaufnahmegrund eine MBS-Interessenänderung ist, oder Senden einer Uplink-Signalisierung; oder
als Reaktion darauf, dass der Verbindungswiederaufnahmeprozess durch die Empfangskonfigurationsänderungsnachricht ausgelöst wird, Angeben gegenüber der netzwerkseitigen Einrichtung, dass ein Verbindungswiederaufnahmegrund zumindest eines von Folgendem ist:
eine MBS-Konfigurationsaktualisierung, eine MBS-Empfangsbereichsaktualisierung oder eine MBS-Empfangsbereichsänderung.

8. Das Verfahren nach Anspruch 1, ferner umfassend:
Einstellen eines den Bereichsinformationen entsprechenden Frequenzpunkts oder einer den Bereichsinformationen entsprechenden Zelle als einen Frequenzpunkt hoher Priorität oder eine Zelle hoher Priorität für das Benutzergerät zum Durchführen einer Zellenauswahl oder -neuauswahl.

9. Das Verfahren nach Anspruch 8, ferner umfassend:
als Reaktion darauf, dass sich das Benutzergerät aus einem durch die Bereichsinformationen angegebenen Bereich herausbewegt, oder auf eine Änderung eines Interesses des Benutzergeräts am Empfangen von MBS-Daten, oder darauf, dass das Benutzergerät eine Empfangskonfigurationsänderungsnachricht von der netzwerkseitigen Einrichtung empfängt, Aufheben des den Bereichsinformationen entsprechenden Frequenzpunkts oder der den Bereichsinformationen entsprechenden Zelle als den Frequenzpunkt hoher Priorität oder die Zelle hoher Priorität für das Benutzergerät zum Durchführen der Zellenauswahl oder - neuauswahl.

10. Das Verfahren nach Anspruch 7 oder 9, wobei,
die Empfangskonfigurationsänderungsnachricht durch die netzwerkseitige Einrichtung über eine RRC-Nachricht oder Informationen eines physikalischen Kanals angegeben wird.

11. Ein Verfahren zum Senden eines Multicast-Broadcast-Dienstes, MBS, das von einer netzwerkseitigen Einrichtung ausgeführt wird, umfassend:
Senden (401) von Konfigurationsanzeigeinformationen an ein Benutzergerät; wobei die Konfigurationsanzeigeinformationen MBS-Empfangskonfigurationsinformationen und Bereichsinformationen angeben, auf die die MBS-Empfangskonfigurationsinformationen anwendbar sind, so dass das Benutzergerät in einer Multicast-Weise gesendete MBS-Daten, basierend auf den MBS-Empfangskonfigurationsinformationen und Bereichsinformationen, in einem inaktiven Zustand der Funkressourcensteuerung, RRC, empfängt;
wobei die Bereichsinformationen zumindest eines von Folgendem umfassen:
eine Zellenliste von Zellen, die einen oder mehrere MBS-Multicast-Dienste in dem inaktiven RRC-Zustand bereitstellen;
wobei die MBS-Empfangskonfigurationsinformationen umfassen:
eine MBS-ID, eine MBS-Scheduling-ID und eine MBS-Trägerkonfiguration, wobei die MBS-ID eine Kennung einer MBS-Sitzung angibt, die von dem UE in dem inaktiven RRC-Zustand zu empfangen ist, die MBS-Scheduling-ID eine G-RNTI ist, die zum Verwürfeln eines Schedulings von MBS-Daten konfiguriert ist, und die MBS-Trägerkonfiguration eine Konfiguration von MBS-Träger angibt, dem die MBS-Sitzung zugeordnet ist.

12. Das Verfahren nach Anspruch 11, wobei das Senden der Konfigurationsanzeigeinformationen an das Benutzergerät umfasst:
als Reaktion darauf, dass sich das Benutzergerät in einem verbundenen RRC-Zustand befindet, Senden einer Verbindungsfreigabenachricht an das Benutzergerät; die Verbindungsfreigabenachricht zum Mitführen der Konfigurationsanzeigeinformationen.

13. Eine zum Empfangen eines Multicast-Broadcast-Dienstes, MBS, konfigurierte Vorrichtung, umfassend:
ein Anzeigeinformationsempfangsmodul (601), konfiguriert zum Empfangen von Konfigurationsanzeigeinformationen zum Angeben von MBS-Empfangskonfigurationsinformationen und Bereichsinformationen, auf die die MBS-Empfangskonfigurationsinformationen anwendbar sind, von einer netzwerkseitigen Einrichtung; und
ein Datenempfangsmodul (602), konfiguriert zum Empfangen von in einer Multicast-Weise gesendeten MBS-Daten, basierend auf den MBS-Empfangskonfigurationsinformationen und den Bereichsinformationen, in einem inaktiven RRC-Zustand;
wobei die Bereichsinformationen umfassen:
eine Zellenliste von Zellen, die einen oder mehrere MBS-Multicast-Dienste in dem inaktiven RRC-Zustand bereitstellen;
wobei die MBS-Empfangskonfigurationsinformationen umfassen:
eine MBS-ID, eine MBS-Scheduling-ID und eine MBS-Trägerkonfiguration, wobei die MBS-ID eine Kennung einer MBS-Sitzung angibt, die von dem UE in dem inaktiven RRC-Zustand zu empfangen ist, die MBS-Scheduling-ID eine G-RNTI ist, die einem Scheduling von MBS-Daten zugeordnet ist, und die MBS-Trägerkonfiguration eine Konfiguration eines der MBS-Sitzung entsprechenden MBS-Trägers angibt.

14. Eine zum Senden eines Multicast-Broadcast-Dienstes, MBS, konfigurierte Vorrichtung, umfassend:
ein Anzeigeinformationssendemodul (701), konfiguriert zum Senden von Konfigurationsanzeigeinformationen an ein Benutzergerät; wobei die Konfigurationsanzeigeinformationen MBS-Empfangskonfigurationsinformationen und Bereichsinformationen angeben, auf die die MBS-Empfangskonfigurationsinformationen anwendbar sind, so dass das Benutzergerät in einer Multicast-Weise gesendete MBS-Daten, basierend auf den MBS-Empfangskonfigurationsinformationen und Bereichsinformationen, in einem inaktiven Zustand der Funkressourcensteuerung, RRC, empfängt;
wobei die Bereichsinformationen umfassen:
eine Zellenliste von Zellen, die einen oder mehrere MBS-Multicast-Dienste in dem inaktiven RRC-Zustand bereitstellen;
wobei die MBS-Empfangskonfigurationsinformationen umfassen:
eine MBS-ID, eine MBS-Scheduling-ID und eine MBS-Trägerkonfiguration, wobei die MBS-ID eine Kennung einer MBS-Sitzung angibt, die von dem UE in dem inaktiven RRC-Zustand zu empfangen ist, die MBS-Scheduling-ID eine G-RNTI ist, die einem Scheduling von MBS-Daten zugeordnet ist, und die MBS-Trägerkonfiguration eine Konfiguration eines der MBS-Sitzung entsprechenden MBS-Trägers angibt.

## Revendications

1. Un procédé de réception d'un service de diffusion multicast, MBS, mis en œuvre par un équipement utilisateur, comprenant :
recevoir (301) des informations d'indication de configuration, dans lequel les informations d'indication de configuration indiquent des informations de configuration de réception MBS provenant d'un équipement côté réseau et des informations de zone auxquelles les informations de configuration de réception MBS sont applicables; et
recevoir (302) des données MBS transmises de manière multicast, sur la base des informations de configuration de réception MBS et des informations de zone, dans un état de commande de ressources radio, RRC, inactif;
dans lequel les informations de zone comprennent :
une liste de cellules comprenant des cellules fournissant un ou plusieurs services multicast MBS dans l'état RRC inactif;
dans lequel les informations de configuration de réception MBS comprennent:
un ID MBS, un ID d'ordonnancement MBS et une configuration de support MBS, dans lequel l'ID MBS indique un identifiant d'une session MBS devant être reçue par l'UE dans l'état RRC inactif, l'ID d'ordonnancement MBS est un G-RNTI associé à un ordonnancement de données MBS, et la configuration de support MBS indique une configuration d'un support MBS correspondant à la session MBS.

2. Le procédé selon la revendication 1, dans lequel recevoir (301) les informations d'indication de configuration provenant de l'équipement côté réseau comprend:
recevoir un message de libération de connexion provenant de l'équipement côté réseau dans un état RRC connecté; et
obtenir les informations d'indication de configuration transportées dans le message de libération de connexion.

3. Le procédé selon la revendication 1 ou 2, dans lequel
les informations d'indication de configuration comprennent les informations de configuration de réception MBS;
ou
dans lequel les informations d'indication de configuration indiquent que les informations de configuration de réception MBS utilisées dans un état RRC connecté sont utilisées comme les informations de configuration de réception MBS utilisées dans l'état RRC au repos ou l'état RRC inactif.

4. Le procédé selon l'une quelconque des revendications 1 à 3, dans lequel les informations de configuration de réception MBS comprennent en outre au moins l'une parmi:
une configuration de réception discontinue, DRX, et une configuration de sécurité pour la réception MBS.

5. Le procédé selon l'une quelconque des revendications 1 à 4, comprenant en outre:
déterminer des informations de zone auxquelles les informations de configuration de réception MBS sont applicables;
de préférence, dans lequel
les informations de zone sont indiquées par l'équipement côté réseau ou prédéfinies par un protocole;
dans lequel les informations de zone comprennent en outre au moins l'un parmi:
un type de cellule, un ID de zone MBS, un ID de zone de notification de réseau d'accès ou un ID de zone de suivi.

6. Le procédé selon la revendication 1, comprenant en outre:
en réponse au fait que l'équipement utilisateur se déplace hors d'une zone indiquée par les informations de zone, ou à un changement concernant un intérêt de l'équipement utilisateur à recevoir des données MBS, ou au fait que l'équipement utilisateur reçoit un message de changement de configuration de réception provenant de l'équipement côté réseau, déclencher un processus de reprise de connexion.

7. Le procédé selon la revendication 6, dans lequel:
en réponse au fait que le processus de reprise de connexion est déclenché par le fait que l'équipement utilisateur se déplace hors de la zone indiquée par les informations de zone, indiquer à l'équipement côté réseau qu'une raison de reprise de connexion est une mise à jour de zone de réception MBS ou un changement de zone de réception MBS; ou
en réponse au fait que le processus de reprise de connexion est déclenché par le changement concernant l'intérêt de l'équipement utilisateur à recevoir des données MBS, indiquer à l'équipement côté réseau qu'une raison de reprise de connexion est un changement d'intérêt MBS ou transmettre une signalisation de liaison montante; ou
en réponse au fait que le processus de reprise de connexion est déclenché par le message de changement de configuration de réception, indiquer à l'équipement côté réseau qu'une raison de reprise de connexion est au moins l'un parmi:
une mise à jour de configuration MBS, une mise à jour de zone de réception MBS ou un changement de zone de réception MBS.

8. Le procédé selon la revendication 1, comprenant en outre:
définir un point de fréquence ou une cellule correspondant aux informations de zone comme un point de fréquence à haute priorité ou une cellule à haute priorité pour que l'équipement utilisateur effectue une sélection ou une resélection de cellule.

9. Le procédé selon la revendication 8, comprenant en outre:
en réponse au fait que l'équipement utilisateur se déplace hors d'une zone indiquée par les informations de zone, ou à un changement concernant un intérêt de l'équipement utilisateur à recevoir des données MBS, ou au fait que l'équipement utilisateur reçoit un message de changement de configuration de réception provenant de l'équipement côté réseau, annuler la définition du point de fréquence ou de la cellule correspondant aux informations de zone comme le point de fréquence à haute priorité ou la cellule à haute priorité pour que l'équipement utilisateur effectue la sélection ou la resélection de cellule.

10. Le procédé selon la revendication 7 ou 9, dans lequel,
le message de changement de configuration de réception est indiqué par l'équipement côté réseau au moyen d'un message RRC ou d'informations de canal physique.

11. Un procédé de transmission d'un service de diffusion multicast, MBS, mis en œuvre par un équipement côté réseau, comprenant:
transmettre (401) des informations d'indication de configuration à un équipement utilisateur ; dans lequel les informations d'indication de configuration indiquent des informations de configuration de réception MBS et des informations de zone auxquelles les informations de configuration de réception MBS sont applicables, de sorte que l'équipement utilisateur reçoive des données MBS transmises de manière multicast, sur la base des informations de configuration de réception MBS et d'informations de zone, dans un état de commande de ressources radio, RRC, inactif;
dans lequel les informations de zone comprennent au moins l'un parmi:
une liste de cellules comprenant des cellules fournissant un ou plusieurs services multicast MBS dans l'état RRC inactif;
dans lequel les informations de configuration de réception MBS comprennent:
un ID MBS, un ID d'ordonnancement MBS et une configuration de support MBS, dans lequel l'ID MBS indique un identifiant d'une session MBS devant être reçue par l'UE dans l'état RRC inactif, l'ID d'ordonnancement MBS est un G-RNTI configuré pour brouiller un ordonnancement de données MBS, et la configuration de support MBS indique une configuration de support MBS auquel la session MBS est mise en correspondance.

12. Le procédé selon la revendication 11, dans lequel transmettre les informations d'indication de configuration à l'équipement utilisateur comprend:
en réponse au fait que l'équipement utilisateur est dans un état RRC connecté, transmettre un message de libération de connexion à l'équipement utilisateur; le message de libération de connexion étant destiné à transporter les informations d'indication de configuration.

13. Un appareil configuré pour recevoir un service de diffusion multicast, MBS, comprenant :
un module de réception d'informations d'indication (601), configuré pour recevoir des informations d'indication de configuration destinées à indiquer des informations de configuration de réception MBS et des informations de zone auxquelles les informations de configuration de réception MBS sont applicables depuis un équipement côté réseau; et
un module de réception de données (602), configuré pour recevoir des données MBS transmises de manière multicast, sur la base des informations de configuration de réception MBS et des informations de zone, dans un état RRC inactif;
dans lequel les informations de zone comprennent:
une liste de cellules comprenant des cellules fournissant un ou plusieurs services multicast MBS dans l'état RRC inactif;
dans lequel les informations de configuration de réception MBS comprennent:
un ID MBS, un ID d'ordonnancement MBS et une configuration de support MBS, dans lequel l'ID MBS indique un identifiant d'une session MBS devant être reçue par l'UE dans l'état RRC inactif, l'ID d'ordonnancement MBS est un G-RNTI associé à un ordonnancement de données MBS, et la configuration de support MBS indique une configuration d'un support MBS correspondant à la session MBS.

14. Un appareil configuré pour transmettre un service de diffusion multicast, MBS, comprenant:
un module de transmission d'informations d'indication (701), configuré pour transmettre des informations d'indication de configuration à un équipement utilisateur ; dans lequel les informations d'indication de configuration indiquent des informations de configuration de réception MBS et des informations de zone auxquelles les informations de configuration de réception MBS sont applicables, de sorte que l'équipement utilisateur reçoive des données MBS transmises de manière multicast, sur la base des informations de configuration de réception MBS et d'informations de zone, dans un état de commande de ressources radio, RRC, inactif;
dans lequel les informations de zone comprennent:
une liste de cellules comprenant des cellules fournissant un ou plusieurs services multicast MBS dans l'état RRC inactif;
dans lequel les informations de configuration de réception MBS comprennent:
un ID MBS, un ID d'ordonnancement MBS et une configuration de support MBS, dans lequel l'ID MBS indique un identifiant d'une session MBS devant être reçue par l'UE dans l'état RRC inactif, l'ID d'ordonnancement MBS est un G-RNTI associé à un ordonnancement de données MBS, et la configuration de support MBS indique une configuration d'un support MBS correspondant à la session MBS.
